(19) Europäisches Patentamt

European Patent Office

Office européen des brevets

(11) **EP 0 987 591 A2**

(12) **EUROPÄISCHE PATENTANMELDUNG**

(43) Veröffentlichungstag:
**22.03.2000 Patentblatt 2000/12**

(51) Int. Cl.7: **G03B 27/72**, **H04N 1/407**

(21) Anmeldenummer: **99117348.5**

(22) Anmeldetag: **03.09.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **15.09.1998 DE 19842215**

(71) Anmelder:
**Agfa-Gevaert Aktiengesellschaft
51373 Leverkusen (DE)**

(72) Erfinder:
• **Füssel, Markus
  81373 München (DE)**
• **Jacob, Friedrich
  81247 München (DE)**
• **Fürsich, Manfred, Dr.
  82024 Taufkirchen (DE)**
• **Taresch, Gudrun, Dr.
  80337 München (DE)**

(54) **Vorrichtung und Verfahren zum Aufbelichten von Bildvorlagen auf lichtempfindliches Material**

(57) Es wird ein Verfahren und eine Vorrichtung zum Aufbelichten von Bildvorlagen auf lichtempfindliches Material beschrieben, wobei aus den Dichtewerten der Vorlagen und aus vorbestimmten Gradationsfaktoren unscharfe Masken zum Verändern des Belichtungsstrahlengangs oder der abzubildenden Dichtewerte ermittelt werden. Zum Ermitteln der Maske einer Vorlage werden mehrere unterschiedliche Gradationsfaktoren verwendet.

Fig.3

EP 0 987 591 A2

**Beschreibung**

Die Erfindung betrifft ein Verfahren sowie eine Vorrichtung zum Aufbelichten von Bildvorlagen auf lichtempfindlichem Material nach dem Oberbegriff von Anspruch 1 bzw. Anspruch 23.

Der Belichtungsumfang von Negativfilmen und den CCDs von digitalen Kameras ist weitaus größer als der von Fotopapier. Aus diesem Grund ist es sehr problematisch, kontrastreiche Motive mit großen Helligkeitsunterschieden gut als Kopie auf Fotopapier wiederzugeben. Solche Motive mit sehr hellen und sehr dunklen Bereichen werden zwar vom Negativfilm oder der digitalen Kamera erfaßt, in der Papierkopie aber entweder in den hellen Bereichen unter- oder aber in den dunklen Bereichen überbelichtet. Einzelne Details sind dann in den entsprechenden unter- oder überbelichteten Bereichen des Papierbildes nur noch sehr schlecht oder gar nicht mehr erkennbar.

Um beim Kopieren derartiger kontrastreicher Aufnahmen die Qualität der Papierbilder zu verbessern, ist es bekannt, Masken zur Kontrastreduzierung beim Kopieren zu verwenden.

So wird beispielsweise in der DE-OS 40 40 498 vorgeschlagen, eine Maske, die ein sehr unscharfes inverses Abbild der Bildvorlage wiedergibt, während des Kopierens in den Beleuchtungsstrahlengang des Negatives einzubringen. Dadurch wird der Großflächenkontrast in der Kopie reduziert, während der Detailkontrast unverändert bleibt.

In der DE-PS 196 34 148 wird beschrieben, wie die Bildvorlage, die Beleuchtungseinrichtung und die Maske aufeinander und auf die unterschiedlichsten Printer abgestimmt werden können. Zur Berechnung der Maske wird hier aus den in einer zweidimensionalen Matrix abgespeicherten Werten $y_{l,m}$ des Luminanzbildes der Vorlage ein unscharfes Luminanzbild

$$y^{''}_{l,m}=\frac{1}{(2n+1)^2}\sum_{k1=l-n}^{k1=l+n}\sum_{k2=m-n}^{k2=m+n} y_{k1,k2}$$

erzeugt. Hier ist n die Anzahl der Punkte des Luminanzbildes, über die gemittelt werden soll.

Dieses unscharfe Bild wird nun invertiert und normiert, so daß sich unter Berücksichtigung der Gradation die endgültigen Bildpunkte $y^{'''}_{l,m}$ für die Maske nach der Formel

$$y^{'''}_{l,m} = 255\left(\frac{y^{''}_d}{y^{''}_{l,m}}\right)^{\gamma}$$

ergeben. In dieser Formel bezeichnet $y^{''}_d$ den Wert des dunkelsten Bildpunkts des unscharfen Luminanzbildes und $\gamma$ den Gradationsfaktor.

Bei einem digitalen Kopiervorgang wird die Maske mit dem Luminanzbild verrechnet, so daß sich die korrigierten Bildpunkte des Luminanzbildes folgendermaßen ergeben

$$y^{iv}_{l,m} = y_{l,m}\left(\frac{255}{y^{''}_{l,m}}\right)^{\gamma}.$$

Die Maske verändert das kopierte Bild derartig, daß beispielsweise ein schwarzer Bereich in einer hellen Umgebung aufgehellt wird, so daß die Strukturen im dunklen Bereich besser sichtbar werden. Dadurch wird Bildinformation beispielsweise im Bereich von Schlagschatten, die auf helle Gesichter fallen, aufgehellt, so daß auch die im Schatten liegenden Gesichtsbereiche deutlich sichtbar werden. Dabei ist der Gradationsfaktor $\gamma$ für die Stärke der Aufhellung verantwortlich oder allgemeiner für die Maskenstärke - also den Grad der Reduktion des Großflächenkontrastes - des Kontrastes zwischen zwei großen Bereichen unterschiedlicher Helligkeit.

In der DE-PS 196 34 148 wird vorgeschlagen, abhängig vom Dichteumfang der Vorlage zu entscheiden, ob überhaupt maskiert werden soll. Sobald die Entscheidung für eine Maskierung gefallen ist, wird jedes Bild mit einer Maske überlagert, in die ein vorbestimmter Gradationsfaktor eingerechnet wird. Für alle Bilder wird derselbe Gradationsfaktor $\gamma = 0.5$ eingesetzt, der sich als vorteilhaft erwiesen hat.

Es hat sich herausgestellt, daß das in der DE-PS 196 34 148 beschriebene Verfahren bei bestimmten Vorlagen zu ausgezeichneten Bildergebnissen führt, wohingegen für andere Vorlagen das Resultat nicht befriedigen konnte. Beispielsweise wurde festgestellt, daß der Bildeindruck im Vergleich zu unmaskierten Kopien deutlich verschlechtert wird, wenn schwarze, also im Negativ unbelichtete Stellen, die keinerlei Bildinformation enthalten, beim Belichten aufgehellt werden. Dabei kann das Farbkippen des Films bewirken, daß im Original vollkommen schwarze Bereiche in der Kopie als störende, strukturlose Bereiche in grau, grün oder braun erscheinen. So kann es sich sehr nachteilig auf das Bildergebnis auswirken, wenn Bilder, deren Wirkung im Kontrast zwischen Hell und Dunkel liegt - wie beispielsweise ein Bildausschnitt, der eine schwarze Katze vor einer weißen Wand zeigt - maskiert werden. In der Kopie würde die schwarze Katze bei einer Maskierung des Bildes nach dem beschriebenen Verfahren grau erscheinen.

Es war daher Aufgabe der Erfindung, ein Verfahren zur Maskierung von Vorlagen zu entwickeln, bei dem alle wichtigen Bildinhalte in der Kopie optimal wiedergegeben werden.

Gelöst wird diese Aufgabe gemäß der Erfindung durch ein Verfahren mit den Merkmalen von Anspruch 1 und eine Vorrichtung mit den Merkmalen von Anspruch 23.

Sowohl für analoge Kopierverfahren, bei denen eine Maske zum Reduzieren der Kopierlichtmenge beim Belichten des Negativs genutzt wird, um den Großflächenkontrast in der Abbildung zu verringern, als auch für digitale Kopierverfahren, bei denen eine digitale Maske zum selben Zweck direkt mit den Bilddaten verrechnet wird, wird erfindungsgemäß vorgeschlagen, bei der Berechnung der Maske für eine Vorlage mehrere unterschiedliche, vorbestimmte Gradationsfaktoren $\gamma$ zu verwenden. Die Gradationsfaktoren, welche die Stärke des Maskierens bestimmen, können dabei entweder vor jedem Bild neu vorbestimmt werden oder aber für einen Auftrag oder dauerhaft für einen Printer vorgegeben sein. Durch das Verwenden unterschiedlicher Gradationsfaktoren zur Berechnung der Maske einer Vorlage wird es möglich, verschiedene Bereiche des Bildes unterschiedlich stark zu maskieren. In Bereichen, deren Bildinhalt auf der Kopie durch starkes Maskieren verbessert wiedergegeben wird, kann jetzt ein sehr großes $\gamma$ gewählt werden, während erfindungsgemäß in Bereichen, deren Bildinhalt beim Kopieren mit einer starken Maske eher verfälscht würde, ein sehr kleines $\gamma$ gewählt wird. In Bereichen, in denen der Gradationsfaktor $\gamma$ groß gewählt wird, wird der Großflächenkontrast des Bildes stark reduziert, während er in anderen Bereichen durch die Wahl eines kleinen Gradationsfaktors nahezu unverändert bleibt. Das ermöglicht es, ein Bild optimal wiederzugeben, in dem durch Schatten verdeckte Bildbereiche aufgehellt werden, während zugleich gewollt dunkle Bereiche - wie eine schwarze Katze - schwarz bleiben, weil sie verhältnismäßig schwach maskiert werden.

Die Erfindung kann nicht nur bei herkömmlichen Printern angewendet werden, bei denen eine transparente Vorlage durch eine Lichtquelle direkt auf lichtempfindliches Material abgebildet wird, sondern ebenso bei digitalen Printern. Bei digitalen Printern wird entweder eine Vorlage elektronisch abgetastet, digitalisiert und bearbeitet oder eine bereits abgespeicherte, digitale Vorlage bearbeitet und mittels einer digitalen Belichtungseinrichtung auf das lichtempfindliche Material abgebildet. Bei einem digitalen Printer wird die Maske mit den Bilddaten verrechnet, bevor diese mit einem pixelweise ansteuerbaren Lichtventil - wie einem LCD, einem DMD oder mit LEDs - oder aber mit einem über das Papier geführten Laser- oder CRT-Strahl oder jeder anderen digital ansteuerbaren Lichtquelle auf das Papier aufbelichtet werden.

Es hat sich als vorteilhaft erwiesen, bei Bildern, die mit der herkömmlichen Maskierungsmethode unbefriedigend kopiert werden, für unterschiedliche Dichtewerte der Vorlage unterschiedliche Gradationsfaktoren zu wählen. Hierfür werden die Dichtewerte der Vorlage in n Dichtewerte-Intervalle eingeteilt, wobei jedem Dichtewerte-Intervall ein Gradationsfaktor zugeordnet wird. Die Dichtewerte-Intervalle können dabei beliebig groß sein und beliebig viele werden. Bereits zwei Intervalle führen oft zu optimalen Ergebnissen. Die Gradationsfaktoren zu den Dichtewerte-Intervallen können alle unterschiedlich sein, müssen aber nicht.

Als Gradationsfaktor ist sowohl ein konstanter Faktor pro Intervall als auch eine beliebige Funktion der Dichtewerte vorstellbar.

Die Intervallgrenzen und die zu den Intervallen gehörenden Gradationsfaktoren können auf verschiedene Art und Weise vorbestimmt werden. Eine Möglichkeit ist es, diese Parameter direkt vom Bedienpersonal einstellen zu lassen. In diesem Fall werden sie abhängig vom Bildeindruck und vom Geschmack des Bedienpersonals gewählt. Dieses Vorgehen wäre insbesondere bei einem digitalen Printer vorstellbar. Dabei werden die Dichtewerte der Vorlage mit einer Maske verrechnet, die nach den vom Bedienpersonal vorgegebenen Parametern ermittelt wurde. Anschließend wird das maskierte Bild auf einem Monitor dargestellt, so daß entschieden werden kann, ob das Bild so geprintet werden soll oder andere Parameter gewählt werden. Dabei können dem Bediener alle Parameter zum Einstellen freigegeben oder aber beispielsweise die Intervallgrenzen festgehalten werden, während die zugehörigen Gradationsfaktoren eingegeben werden können. Dadurch ist es möglich, daß der Bediener je nach seinem individuellen Geschmack wählen kann, wie stark helle oder dunkle Bereiche im Bild maskiert werden sollen.

Eine weitere Möglichkeit, die Intervallgrenzen und Gradationsfaktoren vorzubestimmen, ist es, diese Parameter bereits bei der Fertigung des Printers abzulegen. Diese Möglichkeit hat den Vorteil, daß die Parameter durch Kopierreihen optimiert werden können, bei denen viele Bilder mit unterschiedlichen Masken maskiert werden, und der Bediener nicht mit der Einstellung der Parameter belastet wird.

Es ist aber auch möglich, beide Varianten miteinander zu kombinieren. So können bereits vorgegebene Parameter im Printer vorgesehen sein; zusätzlich kann aber dem Bediener die Möglichkeit eröffnet werden, diese Parameter zu verändern.

Es hat sich als vorteilhaft erwiesen, daß mehrere Sätze von Intervallgrenzen und/oder Gradationsfaktoren für unterschiedliche Bildtypen vorgegeben werden. So werden beispielsweise Blitzlichtaufnahmen mit anderen Parametern maskiert als Landschaftsaufnahmen. Damit können die künstlichen Beleuchtungsverhältnisse von Blitzlichtaufnahmen besser korrigiert werden.

Eine weitere Möglichkeit ist es, die Intervallgrenzen und/oder Gradationsfaktoren aus den Dichtewerten der Vorlage abzuleiten. Die Parameter können dabei an die mittlere Dichte der Vorlage, an die minimale oder maximale Dichte der Vorlage, an das Verhältnis von minimaler zu maximaler Dichte oder jede andere Dichte gebunden werden. Besonders vorteilhaft ist es, die Maskenparameter an der Dichte des bildwichtigen Bereichs zu orientieren. Bildwichtige Bereiche, die von der Kopierlogik erkannt werden, sind beispielsweise die Gesichtspartien bei einer Blitzlichtaufnahme oder der dunkle Vordergrund bei einer Gegenlichtaufnahme. Da diese Bereiche das Bild dominieren, ist es besonders wichtig, sie in der Kopie optimal darzustellen, was dadurch gewährleistet wird, daß der Grad der Maskierung auf diese Bereiche optimiert wird. Falls die Dichte bildwichtiger Bereiche im Negativ nahe der Filmmaske liegt bzw. im digitalen Bild unterhalb eines minimalen Wertes, deutet das auf ein unterbelichtetes Bild hin. In diesem Fall sollten die Gradationsfaktoren für die Maske an der Stelle der bildwichtigen Bereiche sehr klein oder sogar negativ gewählt werden. Hier sind auch beliebige andere Varianten der Wahl der Parameter anhand der Dichten vorstellbar.

Durch diese Maskengestaltung ist es möglich, unterbelichtete Bilder, die eine geringe mittlere Dichte aufweisen, ganz anders zu maskieren als normal- oder überbelichtete. So kann verhindert werden, daß unterbelichtete Bilder im Gesamten zusätzlich verdunkelt werden.

Es ist auch möglich, die Parameter Intervallgrenzen und Gradationsfaktoren von den Häufigkeiten der Dichtewerte der Vorlage abhängig zu machen, denn es ist vorteilhaft, Intervalle, deren Dichtewerte selten in der Vorlage auftreten, stärker zu maskieren. Dadurch wird erreicht, daß derartige Dichtewerte-Intervalle, die kaum Bildinformation tragen, in der Kopie nur einen sehr geringen Dichteumfang haben, also nur sehr wenige verschiedene Graustufen umfassen. Da der Dichteumfang des Fotopapiers begrenzt ist, ist es immer erstrebenswert, so wenig Graustufen wie möglich an bildunwichtige Bereiche zu binden.

Bei einer eher ausgewogenen Häufigkeitsverteilung der Dichtewerte ist es dagegen vorteilhaft, die Gradationsfaktoren, die bei einer transparenten Negativvorlage zu den Intervallen niedrigerer Dichtewerte gehören, kleiner zu wählen als die Gradationsfaktoren, die zu Intervallen höherer Dichtewerte gehören. Bei positiven Vorlagen ist es umgekehrt. Das hat zur Folge, daß in der Kopie dunklere Bildbereiche generell weniger stark maskiert werden als helle Bildbereiche. Dadurch ist es gewährleistet, daß schwarze Katzen auf dem Bild schwarz bleiben können, während schwache Schatten in hellen Bereichen noch stärker aufgehellt werden können.

Dieses Vorgehen ist insbesondere dann vorteilhaft, wenn die kleinsten Dichtewerte der transparenten Negativ-Vorlage sehr nahe an der Filmmaske liegen, wie das beim Negativ der Aufnahme einer schwarzen Katze gegeben ist. In diesem Fall ist es vorteilhaft, den Gradationsfaktor, der zum Intervall kleinster Dichtewerte - also zur Katze - gehört, gleich Null zu setzen, so daß dieser Bereich nicht stark maskiert wird. Eine andere Möglichkeit ist es, den Gradationsfaktor in diesem Dichtewerte-Intervall negativ zu wählen. Dies hat dann eine inverse Maskierung, also eine Anhebung des Großflächenkontrastes zur Folge; in der Kopie würde die schwarze Katze im Vergleich zur Umgebung schwärzer erscheinen, so daß der Kontrast in der Kopie noch stärker zur Geltung kommt.

Bei manchen Vorlagentypen ist es vorteilhaft, unterschiedliche Gradationsfaktoren für unterschiedliche lokale Bereiche der Vorlage zu wählen. So kann beispielsweise im Zentrum der Vorlage, wo sich in der Regel die bildwichtigen Bestandteile befinden, eine andere Maskenstärke vorteilhaft sein als am Rand des Bildes. So könnte z. B. bei unterbelichteten Bildern die Bildmitte negativ maskiert, also im Kontrast angehoben werden, während der Bildrand überhaupt nicht maskiert wird, damit die gesamte Bildwirkung natürlicher bleibt.

Selbstverständlich kann die unterschiedliche Wahl der Gradationsfaktoren in Abhängigkeit von der Position im Bild auch mit der Wahl der Gradationsfaktoren nach unterschiedichen Dichtewerten kombiniert werden.

Falls für jeden Farbauszug eine eigene Maske erzeugt wird, kann natürlich auch jede dieser Farbmasken mit unterschiedlichen Gradationsfaktoren berechnet werden. Dadurch könnte jede Farbe in der Kopie abhängig vom Bildinhalt unterschiedlich aufgehellt oder intensiviert werden. So könnte beispielsweise blauer Himmel tiefer blau werden, während ein Gegenstand im gleichen Blau an einer anderen Bildposition unverfälscht wiedergegeben werden kann.

Weitere Einzelheiten und Vorteile der Erfindung ergeben sich aus den Unteransprüchen im Zusammenhang mit der Beschreibung von Vorrichtungsbeispielen, die anhand der Zeichnungen eingehend erläutert werden.

Es zeigen:

Fig. 1    ein Ablaufschema eines digitalen Kopiervorganges,

Fig. 2    eine grafische Darstellung zur Bestimmung der Maskendichte,

Fig. 3    den schematischen Aufbau eines herkömmlichen Printvorgangs und

Fig. 4    eine grafische Darstellung der Bestimmung des Gradationsfaktors aus der Häufigkeitsverteilung der Dichtewerte.

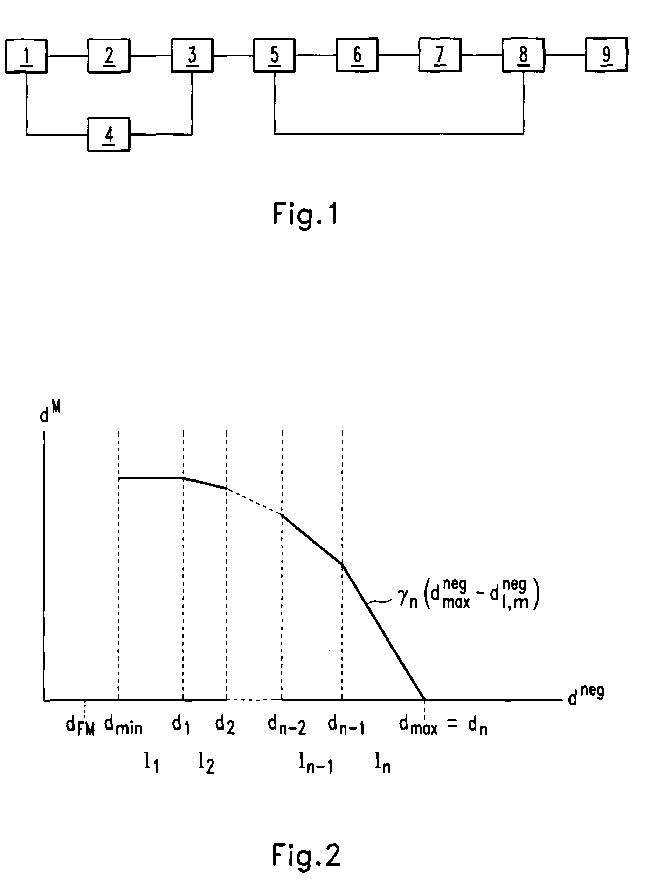

Figur 1 beschreibt einen digitalen Kopiervorgang, bei dem die digitale Vorlage mit einer unscharfen Maske überlagert wird. Das digitale Bild wird entweder durch Scannen einer transparenten Negativvorlage gewonnen oder als digitale Vorlage aus dem Internet oder einem beliebigen Speichermedium in den Vorlagenspeicher 1 eingegeben. Üblicherweise sind jedem Vorlagenpunkt drei Farben und 256 Helligkeitsstufen zugeordnet. Um bei späteren Rechenoperationen undefinierte Ausdrücke zu vermeiden, wird der Wert 0 auf den Wert 1 angehoben, so daß für jede Farbe eines Punktes noch 255 Graustufen zur Verfügung stehen. Die aus dem Vorlagenspeicher 1 ausgelesenen R-, G-, B-Signale werden von dem Wandler 2 in Chrominanzsignale V, U und ein Luminanzsignal Y umgewandelt und in dem Speicher 3 abgelegt. Die Signale werden in der Bildverarbeitungseinheit 4 bearbeitet. Hier wird die Vorlage durch Bildverschärfung oder Fehlerbeseitigung verbessert oder aufgrund einer Bildtyperkennung verändert. Die bearbeiteten Werte werden wiederum im Speicher 3 als Chrominanzsignale und Luminanzsignal abgelegt. Die digitale Bildverarbeitung kann ebensogut nach der Maskierung des Bildes erfolgen. Dann sind jedoch die Kontraste im Bild nicht mehr so stark, so daß die Unterscheidung der Bildtypen für die Logik schwerer werden könnte. Anhand des Luminanzbildes wird nun in einer Recheneinheit 5 entschieden, ob die zu kopierende Vorlage maskiert werden soll. Ein mögliches Entscheidungsverfahren ist in der DE-PS 196 34 148 beschrieben. Wurde entschieden, daß das Bild maskiert werden soll, so wird in der Recheneinheit 5 durch Mittelwertbildung eine unscharfe Rohmaske erzeugt. Die hier anzuwendende Formel lautet:

$$y''_{l,m} = \frac{1}{(2n+1)^2} \sum_{k1=l-n}^{k1=l+n} \sum_{k2=m-n}^{k2=m+n} y_{k1,\,k2}$$

Die nun vorliegenden Werte y'' werden in den Speicher 6 eingeschrieben. Die Rohmaske wird nun in einer weiteren Recheneinheit 7 invertiert, normiert und mit dem Gradationsfaktor verrechnet. Prinzipiell wird auch hier analog zur DE-PS 196 34 148 verfahren. Danach ergibt sich die Maske zu

$$y'''_{l,m} = 255\left(\frac{y''_d}{y''_{l,m}}\right)^{\gamma}$$

mit dem Luminanzwert $y''_d$ des dunkelsten Vorlagenpunktes bei einer eingescannten transparenten Negativvorlage bzw. des hellsten Vorlagenpunktes bei einer digitalen Positivvorlage und dem Gradationsfaktor $\gamma$. Da nun aber erfindungsgemäß die Dichtewerte einer Vorlage zur Berechnung der Maske in n Dichtewerte-Intervalle $I_{i=1,n}$ mit jeweils einem Gradationsfaktor $\gamma_i$ unterteilt werden, muß diese Formel - wie im folgenden beschrieben - erweitert werden.

Analog zur DE-PS 196 34 148 von der Normierung ausgehend, daß der zum Intervall $I_n$ gehörige Luminanzwert $y''_d$ nicht maskiert werden soll, ergibt sich die Maske im Intervall $I_n$ zu

$$y'''_{l,m} = \left(\frac{y''_d}{y''_{l,m}}\right)^{\gamma}.$$

Zur Vereinfachung werden die Luminanzwerte $y'''_{l,m}$ der Maske durch Logarithmieren in Dichten

$$d^M_{l,m} = 1g(y'''_{l,m}) = \gamma_n(d^{neg}_{max} - d^{neg}_{l,m})$$

umgerechnet, wobei $d^{neg}_{max}$ die Dichte des dichtesten Punktes im Negativ und damit gleich der Grenzdichte $d^{neg}_n$ des n-ten Dichtewerte-Intervalles ist.

Für die im anschließenden Dichtewerte-Intervall $I_{n-1}$ liegenden Negativ-Dichten ermittelt man die entsprechenden Maskendichten zu

$$d^M_{l,m} = \gamma_n(d^{neg}_{max} - d^{neg}_{n-1}) + \gamma_{n-1}(d^{neg}_{n-1} - d^{neg}_{l,m}).$$

Für die im i-ten Dichtewerte-Intervall $I_{i\neq n}$ liegenden Negativ-Dichten ergeben sich also die Maskendichten fol-

gendenmaßen

$$d_{l,m}^{M}(d_{l,m}^{neg}) = \gamma_i(d_i^{neg} - d_{l,m}^{neg}) + \sum_{k=0}^{n-(i+1)} \gamma_{n-k}(d_{n-k}^{neg} - d_{n-k-1}^{neg}).$$

Dieses Vorgehen bei der Bestimmung der Dichtewerte der Maske wird in Fig. 2 grafisch dargestellt. Die Dichte der Maske ist hier als Funktion der Negativdichte aufgetragen. Bei der maximalen Dichte des Negativs, die zum hellsten Punkt in der Kopie führt, wird entsprechend der Normierung nicht maskiert, d. h. $d^M(d_n) = 0$. Die Maskendichte an einem Punkt des letzten Intervalles ergibt sich aus dem Produkt der Steigung $\gamma_n$ mit der Differenz aus maximaler Dichte und der Dichte des zu berechnenden Punktes. Im nächsten Intervall addiert sich zur maximalen Maskendichte des vorhergehenden Intervalls wiederum das Produkt eines neuen $\gamma_{n-1}$ mit der Differenz aus Dichte der Intervallgrenze und Dichte des zu maskierenden Punktes. Dieses Verfahren wird bis zur minimalen Dichte der Vorlage fortgesetzt. Die minimale Dichte $D_{min}$ ist die kleinste in der Vorlage vorkommende Dichte. Falls diese Dichte nahe bei der Dichte der Filmmaske $D_{FM}$ liegt, ist die Steigung und damit der Gradationsfaktor $\gamma_1$ im Dichtewerte-Intervall $I_1$ gleich Null.

Die Dichtewerte der Maske werden nun in der Recheneinheit 7 wieder in Luminanzwerte umgerechnet, so daß diese mit den Luminanzwerten der Vorlage verrechnet werden können und das Ergebnis im Bildspeicher 8 abgespeichert werden kann.

In diesen Bildspeicher gelangen ebenso die Chrominanzsignale V und U. Falls bei der Recheneinheit 5 entschieden wird, daß nicht maskiert werden soll, werden diese drei Signale sofort aus der Recheneinheit 5 in den Bildspeicher 8 übertragen. In einem Wandler 9 werden diese Signale wieder in R-,G-,B-Signale transformiert. Ebensogut ist es möglich, auf eine Umwandlung der R-,G-,B-Werte im Luminanz- und Chrominanzsignal gleich zu Beginn des Verfahrens zu verzichten, die Maske direkt aus den R-,G-,B-Werten des Bildes abzuleiten und die Maskenwerte dann mit den R-,G-,B-Bilddaten zu verrechnen. Mit den resultierenden Werten kann nun ein digitaler Printer angesteuert werden.

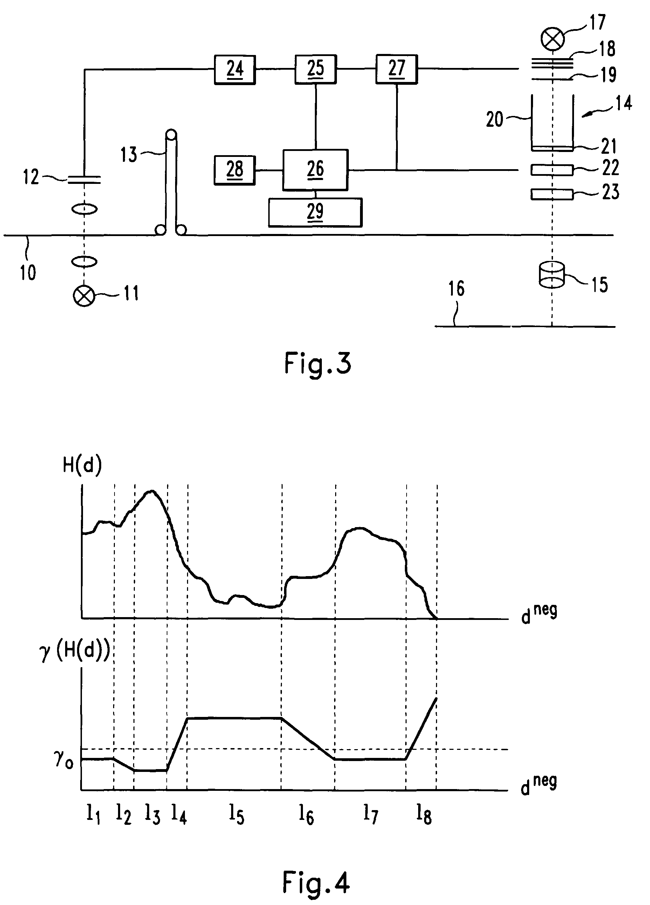

In Fig. 3 ist ein fotografisches Kopiergerät gezeigt, das in herkömmlicher Weise mit direkter bzw. integraler Belichtung arbeitet. Der von links nach rechts transportierte Film 10 durchläuft erst den Scanner mit der Lichtquelle 11 und dem Sensor 12. Dieser Sensor kann als CCD-Flächensensor oder aber bevorzugt als Zeilensensor ausgebildet sein. Im Unterschied zu dem digitalen Kopierer aus Fig. 1 benötigt dieser Scanner jedoch eine wesentlich geringere Auflösung, die beispielsweise bei 400 x 600 Pixeln pro Negativ liegt. Nach dem Scanner läuft der Film in eine Entkoppelungsschlaufe 13, die gewährleistet, daß zumindest ein Großteil eines Films abgetastet wird, bevor das erste Pixelbild dieses Films kopiert wird. Weiterhin soll die Schlaufe - bei Verwendung eines Zeilenscanners - die intermittierende Bewegung des Filmes durch die Kopierstation 14 von der kontinuierlichen Bewegung durch den Scanner entkoppeln.

In der Kopierstation 14 werden die Einzelbilder des Filmes 10 über das Objektiv 15 auf das Papier 16 abgebildet. Die Belichtung erfolgt dabei durch die Lampe 17, die Farbfiltereinheit 18, den Verschluß 19, den Spiegelschacht 20 mit der Streuscheibe 21 an der Austrittsöffnung des Spiegelschachts, das LCD-Display 22 und die Streuscheibe 23. In dem LCD-Display 22 wird wiederum eine unscharfe Maske erzeugt, die den Bildern mit zu hohem Großflächenkontrast diesmal auf optischem Weg überlagert wird. Die Berechnung der Maske erfolgt dabei in analoger Weise zu dem in Fig. 1 beschriebenen Verfahren. Unter dem Bezugszeichen 24 sind in Fig. 3 die Vorgänge 1 bis 3 aus Fig. 1, also bis zur Abspeicherung des Luminanzbildes und der beiden Chrominanzbilder, zusammengefaßt. Das Bezugszeichen 25 stellt den Vorgang 5 der Entscheidung über eine Maskierung dar. In 26 wird die Maske berechnet, invertiert, normiert und die Gradation festgelegt, analog zu der Vorgehensweise 6 bis 8 in Fig. 1. Zur Berechnung der Maske sind in der Look-up-Table (LUT) 28 mehrere Sätze von Dichtewerte-Intervallen und Gradationsfaktoren abgelegt. Zusätzlich können an der Eingabeeinheit 29 vom Bedienpersonal selbst gewählte Intervallgrenzen und/oder Gradationsfaktoren eingegeben werden. Damit das Personal die Wahl der Parameter überprüfen kann, wird eine mit diesen Parametern errechnete Maske mit dem Bild überlagert und an einem bildlich nicht dargestellten Monitor gezeigt. Ist das Bedienpersonal mit dem Ergebnis nicht zufrieden, so kann es neue Parameter an der Eingabeeinheit 29 eingeben. Mit den endgültigen Parametern wird dann - evtl. in Verbindung mit Parametern aus der LUT - eine endgültige Maske errechnet. Die so errechnete Maske wird in dem LCD-Display 22 erzeugt. Über den Belichtungsrechner 27 werden dann die Farbfiltereinheit 18 und der Verschluß 19 in bekannter Weise unter Berücksichtigung der Maskenwerte angesteuert.

In Fig. 4 ist eine alternative Methode zur Bestimmung der Gradationsfaktoren für eine Maske dargestellt. Hierbei wird von der Häufigkeitsverteilung H(d) der Dichtewerte der Vorlage ausgegangen. Den am häufigsten in der Vorlage vorkommenden Dichten im Intervall $I_3$ wird für die Maskierung ein sehr kleines $\gamma$, das weit unterhalb eines mittleren $\gamma_0$ liegt, zugeordnet. Den am wenigsten in der Vorlage vertretenen Dichtewerten, die sich im Intervall $I_5$ befinden, wird ein sehr großes $\gamma$ zugeordnet. Im dazwischenliegenden Intervall $I_4$ steigt das $\gamma$ stetig an, so daß kein Sprung in der Maske entsteht, die anschließend mit dem aus diesem Verfahren ermittelten $\gamma$ errechnet wird.

**Patentansprüche**

1. Verfahren zum Aufbelichten von Bildvorlagen auf lichtempfindliches Material, wobei aus den Dichtewerten der Vorlagen und aus vorbestimmten Gradationsfaktoren unscharfe Masken zum Verändern des Belichtungsstrahlengangs oder der abzubildenden Dichtewerte ermittelt werden, **dadurch gekennzeichnet**, daß zum Ermitteln der Maske einer Vorlage mehrere unterschiedliche Gradationsfaktoren verwendet werden.

2. Verfahren nach Anspruch 1, dadurch gekennzeichnet, daß die Maske eine Graumaske ist.

3. Verfahren nach Anspruch 1, dadurch gekennzeichnet, daß die Maske eine Farbmaske ist.

4. Verfahren nach Anspruch 1, dadurch gekennzeichnet, daß transparente Vorlagen abgetastet, Belichtungsdatensätze errechnet und die Vorlagen über eine Optik auf das lichtempfindliche Material abgebildet werden.

5. Verfahren nach Anspruch 1, dadurch gekennzeichnet, daß Vorlagen digitalisiert, zwischengespeichert, bearbeitet und auf das lichtempfindliche Material aufbelichtet werden.

6. Verfahren nach Anspruch 1, dadurch gekennzeichnet, daß digitale Vorlagen bearbeitet und auf das lichtempfindliche Material aufbelichtet werden.

7. Verfahren nach Anspruch 4, 5 oder 6, dadurch gekennzeichnet, daß für unterschiedliche Dichtewerte einer Vorlage unterschiedliche Gradationsfaktoren gewählt werden.

8. Verfahren nach Anspruch 7, dadurch gekennzeichnet, daß die Dichtewerte der Vorlage in n Dichtewerte-Intervalle $I_{i=1,n}$ eingeteilt werden, wobei jedem Intervall $I_i$ ein Gradationsfaktor $\gamma_i$ zugeordnet wird.

9. Verfahren nach Anspruch 8, dadurch gekennzeichnet, daß die Intervallgrenzen $d_{i(o<i<n)}$ und/oder die zugehörigen Gradationsfaktoren $\gamma_i$ in Abhängigkeit vom Bildeindruck eingestellt werden.

10. Verfahren nach Anspruch 8, dadurch gekennzeichnet, daß die Intervallgrenzen $d_{i(o<i<n)}$ und/oder die zugehörigen Gradationsfaktoren $\gamma_i$ fest vorgegeben werden.

11. Verfahren nach Anspruch 10, dadurch gekennzeichnet, daß mehrere Sätze von Intervallgrenzen und/oder Gradationsfaktoren für unterschiedliche Bildtypen vorgegeben werden.

12. Verfahren nach Anspruch 8, dadurch gekennzeichnet, daß die Intervallgrenzen und/oder Gradationsfaktoren in Abhängigkeit von den Dichtewerten der Vorlage gewählt werden.

13. Verfahren nach Anspruch 12, dadurch gekennzeichnet, daß die Intervallgrenzen und/oder Gradationsfaktoren abhängig von der mittleren Dichte der Vorlage gewählt werden.

14. Verfahren nach Anspruch 12, dadurch gekennzeichnet, daß die Intervallgrenzen und/oder Gradationsfaktoren abhängig von dem minimalen und/oder dem maximalen Dichtewert der Vorlage gewählt werden.

15. Verfahren nach Anspruch 12, dadurch gekennzeichnet, daß die Intervallgrenzen und/oder Gradationsfaktoren abhängig von der mittleren Dichte des bildwichtigen Bereichs gewählt werden.

16. Verfahren nach Anspruch 12, dadurch gekennzeichnet, daß die Intervallgrenzen und/oder Gradationsfaktoren in Abhängigkeit von der Häufigkeitsverteilung der Dichtewerte gewählt werden.

17. Verfahren nach Anspruch 16, dadurch gekennzeichnet, daß die Gradationsfaktoren $\gamma_i$ absolut größer gewählt werden für Intervalle, deren Dichtewerte selten in der Vorlage auftreten.

18. Verfahren nach Anspruch 12, dadurch gekennzeichnet, daß der Gradationsfaktor $\gamma_1$ des Intervalls mit den Dichtewerten, die zu den dunkelsten Punkten in der Kopie führen, kleiner ist als das zu einem Intervall von solchen Dichtewerte gehörige $\gamma_i$, die zu hellen Punkten in der Kopie führen.

19. Verfahren nach Anspruch 18, dadurch gekennzeichnet, daß der Gradationsfaktor $\gamma_1$ abhängig von der Differenz zwischen minimaler Vorlagendichte einer transparenten Vorlage und Filmmaske bzw. zwischen maximaler Dichte einer digitalen Positivvorlage und maximal darstellbarer Dichte gewählt wird.

**20.** Verfahren nach Anspruch 19, dadurch gekennzeichnet, daß der Gradationsfaktor $\gamma_1 < 0{,}2$ ist, wenn die Differenz kleiner als ein Schwellwert $d_s$ ist.

**21.** Verfahren nach Anspruch 19, dadurch gekennzeichnet, daß der Gradationsfaktor $\gamma_1$ negativ ist, wenn die Differenz kleiner als ein Schwellwert $d_s$ ist.

**22.** Verfahren nach Anspruch 4, 5 oder 6, dadurch gekennzeichnet, daß für lokal unterschiedliche Bereich in einer Vorlage unterschiedliche Gradationsfaktoren verwendet werden.

**23.** Vorrichtung zum Aufbelichten von Bildvorlagen auf lichtempfindliches Material mit einer Speichereinheit zum Abspeichern der Dichtewerte der Vorlagen, einer Recheneinheit zum Ermitteln einer unscharfen Maske aus den Dichtewerten und vorbestimmten Gradationsfaktoren und Mitteln zum Verändern des Belichtungsstrahlengangs entsprechend der unscharfen Maske, dadurch gekennzeichnet, daß mit der Recheneinheit eine Eingabeeinheit verbunden ist, die so aufgebaut ist, daß Gradationsfaktoren zur Berechnung der Maske einer Vorlage eingebbar sind.

Fig.1

$$\gamma_n \left( d_{max}^{neg} - d_{l,m}^{neg} \right)$$

Fig.2

Fig.3

Fig.4